# EUROPÄISCHE PATENTSCHRIFT

(11) **EP 2 682 638 B1**
(45) Veröffentlichungstag und Bekanntmachung des Hinweises auf die Patenterteilung: **06.05.2015**
(21) Anmeldenummer: 12175177.0
(22) Anmeldetag: 05.07.2012
(51) Int. Cl.: F16F 9/28, F16F 9/32

(54) **Dämpfungseinrichtung für ein Fahrzeug-Drehgelenk**
Damping device for a vehicle swivel joint
Dispositif d'amortissement pour une articulation tournante de véhicule

(43) Veröffentlichungstag der Anmeldung: 08.01.2014
(73) Patentinhaber: Hemscheidt Fahrwerktechnik GmbH & Co. KG, 42781 Haan-Gruiten (DE)
(72) Erfinder: Runkel, Walter, 53547 Leubsdorf (DE)
(74) Vertreter: Patentanwälte Dr. Solf & Zapf

(56) Entgegenhaltungen:
- DE-A- 4 031 626
- DE-U1- 20 007 762
- DE-U1- 20 317 243
- US-A1- 2007 278 752

## Beschreibung

Die vorliegende Erfindung betrifft gemäß dem Oberbegriff des unabhängigen Anspruchs 1 eine hydraulische Dämpfungseinrichtung für ein Drehgelenk eines Gelenkfahrzeuges, mit mindestens zwei durch relative Drehungen des Drehgelenkes gegensinnig volumenveränderbaren, mit einem hydraulischen Dämpfungsmedium gefüllten Zylinderräumen, die derart mit einem hydraulischen Dämpfungsventil verbunden sind, dass jeweils bei einer Volumen-Verkleinerung das Dämpfungsmedium zur Dämpfung der Gelenkbewegungen unter Aufbau eines hydraulischen Dämpfungsdrucks über das Dämpfungsventil verdrängt wird. Der sich dadurch erhöhende Dämpfungsdruck bewirkt dann eine Dämpfungskraft zwischen den Gelenkteilen des Drehgelenkes.

Derartige Dämpfungseinrichtungen sind in unterschiedlichen Ausgestaltungen in zahlreichen Veröffentlichungen beschrieben. So offenbaren beispielsweise die Dokumente EP 0 422 338 B1, DE 40 31 626 C2 und DE 203 17 243 U1 Ausführungen mit mehreren Dämpferzylindern und zugehörigen Kolben, wobei die Kolben in den Dämpferzylindern bewegt werden, um das Dämpfungsmedium aus den sich jeweils bezüglich ihres Volumens reduzierenden Zylinderräumen durch das Dämpfungsventil zu verdrängen. Zum Antrieb der Kolben ist ein Zahnradantrieb vorgesehen, wobei ein Zahnrad über tangential in Eingriff stehende Zahnstangen die Kolben linear antreibt.

Es sind auch "kinematisch umgekehrte" Ausführungen bekannt, wobei jeweils ein Zylinder relativ zu einem fest stehenden Kolben bewegt wird. Dazu sei beispielsweise auf die Veröffentlichung DE 200 07 762 U1, die eine hydraulische Dämpfungseinrichtung gemäß dem Oberbegriff des Anspruchs 1 offenbart, verwiesen.

Weiterhin sei zum Stand der Technik noch die EP 2 353 893 A1/B1 genannt, wonach zwei hydraulische Zylindereinheiten derart beidseitig einer durch die Gelenkachse verlaufenden Längsachse jeweils zwischen den Gelenkteilen angeordnet sind, dass bei Gelenk-Drehungen die Zylindereinheiten jeweils gegensinnig teleskopisch durch Einschub oder Auszug längenveränderbar sind. Jede Zylindereinheit besteht aus einem Zylinder und einem darin verschiebbaren Kolben. Auch hierbei wird jeweils das Dämpfungsmedium durch ein hydraulisches Dämpfungsventil verdrängt.

Eine Dämpfungseinrichtung der beschriebenen Art ist besonders für Drehgelenke von Gelenkfahrzeugen wichtig, um unkontrollierte Drehschwingungen zwischen den Fahrzeugteilen zu vermeiden, da solche Drehschwingungen zu gefährlichen Fahrsituationen führen können. Deshalb ist es auch bei Gelenken, die mit einer solchen Dämpfungseinrichtung ausgestattet sind, sehr wichtig, dass die Dämpfungseinrichtung stets ordnungsgemäß arbeitet. Allerdings ist im normalen Fahrbetrieb eines Gelenkfahrzeugs eine im Dämpfungssystem eventuell auftretende Störung nicht sofort erkennbar, sondern erst, wenn es bei einer fehlenden oder eingeschränkten Dämpfung zu Schwingungen und dadurch eventuell zu gefährlichen Fahrsituationen kommt.

Der vorliegenden Erfindung liegt daher die Aufgabe zu Grunde, zur Verbesserung der Betriebssicherheit eine Dämpfungseinrichtung der beschriebenen, gattungsgemäßen Art so zu verbessern, dass mit einfachen, kostengünstigen und auch prozesssicheren Mitteln eventuelle Störungen schon frühzeitig erkannt werden können, bevor es zu gefährlichen Situationen kommen kann.

Erfindungsgemäß wird diese Aufgabe durch die Merkmale des unabhängigen Anspruchs 1 gelöst. Vorteilhafte Ausgestaltungen der Erfindung sind in den abhängigen Ansprüchen und auch in der anschließenden Beschreibung enthalten.

Demnach ist erfindungsgemäß vorgesehen, dass die jeweils gegensinnig volumenveränderbaren Zylinderräume zur Erfassung des jeweiligen Dämpfungsdrucks über ein selbsttätig druckabhängig schaltendes Umschaltventil mit einem Drucksensor verbindbar sind, so dass jeweils der Zylinderraum mit dem höheren Druck mit dem Drucksensor verbunden und der Zylinderraum mit dem geringeren Druck von dem Drucksensor getrennt wird.

Durch die Erfindung kann somit über nur einen Drucksensor überwacht werden, ob bei den auftretenden Gelenkbewegungen auch der zur Dämpfung erforderliche Druckanstieg in dem sich jeweils verkleinernden Zylinderraum auftritt. Sollte bei einervorzugsweise ebenfalls über eine geeignete Sensorik erfassten - Gelenkbewegung aber der Druckanstieg nicht oder nur eingeschränkt auftreten, so kann mittels einer Steuereinheit ein Fehlersignal ausgelöst werden, wodurch der Fahrzeugführer die Störung schnell erkennen und das Fahrzeug einer weiteren Überprüfung und Instandsetzung zuführen kann. Das erfindungsgemäße Umschaltventil ermöglicht die Druckerfassung über nur einen Drucksensor, was zu der angestrebten Einfachheit und geringen Kosten führt. Die Erfindung beruht dabei auf der Erkenntnis, dass ja bei allen auftretenden Gelenkbewegungen stets nur in einer Drehrichtung eine Dämpfung bewirkt wird, und zwar über die Verkleinerung des jeweiligen Zylinderraums, und dass deshalb der andere, sich im Volumen vergrößernde Zylinderraum in diesem Betriebszustand nicht hinsichtlich seines Drucks überwacht zu werden braucht. Deshalb wird erfindungsgemäß immer nur der/jeder Zylinderraum auf den Drucksensor geschaltet, der durch Verkleinerung seines Volumens den Dämpfungsdruck aufbaut, indem das Dämpfungsmedium durch das Dämpfungsventil verdrängt wird.

Auch das erfindungsgemäß vorgesehene Umschaltventil lässt sich sehr kostengünstig realisieren. Im einfachsten Fall kann das Umschaltventil aus zwei hydraulisch gegensinnig in Reihe zwischen die gegensinnig volumenveränderbaren Zylinderräume geschalteten Rückschlagventilen bestehen, wobei der Drucksensor zwischen den Rückschlagventilen angeschlossen ist. Dabei ist jedes Rückschlagventil hinsichtlich seiner Schließ- und Öffnungsrichtungen derart orientiert, dass es durch eine Druck-Beaufschlagung aus dem zugehörigen Zylinderraum öffnet und durch eine entgegengesetzte Druck-Beaufschlagung schließt. Bei den Rückschlagventilen kann es sich um sehr einfache und kostengünstige Kugel-Sitzventile handeln.

Alternativ dazu kann das Umschaltventil auch als Doppelsitzventil mit zwei gegenüberliegenden, in jeweils einen von zwei mit den Zylinderräumen verbundenen Eingangsanschlüssen übergehenden Ventilsitzen und einem in einer mit dem Drucksensor verbundenen Ventilkammer freibeweglich zwischen den Ventilsitzen für eine wechselseitige Schließlage angeordneten Ventilelement ausgebildet sein. Im einfachsten Fall kann es sich um ein preisgünstiges Kugel-Doppelsitzventil handeln.

In einer besonders vorteilhaften Ausführung ist das Umschaltventil mit einem derart überlappungsfreien Schaltverhalten ausgebildet, dass jeder Zylinderraum nur mit dem Drucksensor verbindbar ist, eine direkte hydraulische Verbindung zwischen den jeweils gegensinnig volumenveränderbaren Zylinderräumen jedoch ausgeschlossen ist. Dazu ist das Umschaltventil vorzugsweise als kombiniertes Doppelsitz- und Schieberventil ausgebildet. Weitere Einzelheiten dazu werden in der anschließenden Beschreibung noch genauer beschrieben werden.

Anhand der Zeichnungen und darin veranschaulichter, bevorzugter Ausführungsbeispiele soll die Erfindung im Folgenden weitergehend erläutert werden. Es zeigen:
- Fig. 1: eine erfindungsgemäße Dämpfungseinrichtung in einer schematischen Schnittansicht in einer bevorzugten Ausführung und mit einer ersten Ausführung eines Umschaltventils mit zugehörigem Drucksensor,
- Fig. 2: eine Ansicht wie in Fig. 1 mit einer Ausführungsvariante des erfindungsgemäßen Umschaltventils,
- Fig. 3: eine weitere Ansicht wie in Fig. 1 und 2, jedoch mit einer besonders vorteilhaften Ausführung des erfindungsgemäßen Umschaltventils,
- Fig. 4: eine vergrößerte und detailliertere Schnittansicht des Umschaltventils gemäß Fig. 3,
- Fig. 5: eine gesonderte Seitenansicht eines Ventilelementes des Umschaltventils nach Fig. 4,
- Fig. 6: eine axiale Stirnansicht des Ventilelementes in Pfeilrichtung VI gemäß Fig. 5 und
- Fig. 7: eine gegenüberliegende Stirnansicht des Ventilelementes in Pfeilrichtung VII gemäß Fig. 5.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels sowie auch unabhängig von den Merkmalskombinationen und Rückbeziehungen der Ansprüche eine erfinderische Bedeutung haben.

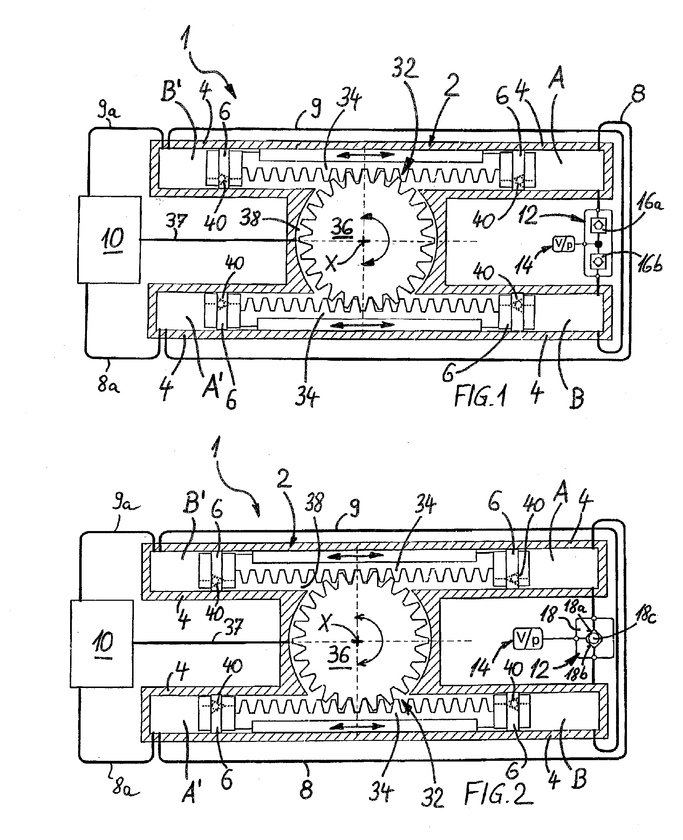

Jede der Figuren 1 bis 3 zeigt eine erfindungsgemäße hydraulische Dämpfungseinrichtung 1 für ein Drehgelenk eines Gelenkfahrzeuges, insbesondere für einen Gelenkbus. Dazu ist die Dämpfungseinrichtung 1 als hydraulische Kolbenzylinderanordnung 2 mit Dämpferzylindern 4 und zugehörigen Kolben 6 ausgebildet, wobei die Dämpferzylinder 4 und die Kolben 6 durch relative Verdrehungen von zwei Gelenkteilen des Drehgelenkes in axialer Richtung relativ zueinander bewegbar sind. In den dargestellten, bevorzugten Ausführungen werden die Kolben 6 innerhalb der Zylinder 4 bewegt, allerdings ist auch eine kinematische Umkehr möglich, wobei die Zylinder 4 relativ zu den Kolben 6 angetrieben werden. Die Dämpferzylinder 4 und die zugehörigen Kolben 6 bilden dadurch mindestens zwei jeweils gegensinnig volumenveränderbare Zylinderräume A und B. In den dargestellten, bevorzugten Ausführungen sind allerdings zwei mal zwei jeweils gegensinnig volumenveränderbare Zylinderräume A und B sowie A' und B' vorhanden. Die Zylinderräume A, A'; B, B' sind mit einem hydraulischen Dämpfungsmedium gefüllt, beispielsweise mit einem Hydrauliköl. Die jeweils gleichsinnig volumenveränderbaren Zylinderräume A und A' sowie B und B' sind paarweise hydraulisch miteinander über Leitungen 8, 9 verbunden. Außerdem sind die Zylinderräume A, A' und B, B' derart mit einem - in den Zeichnungen nur stark vereinfacht als "Black Box" dargestellten-Dämpfungsventil 10 verbunden, dass jeweils bei einer Volumen-Verkleinerung des jeweiligen Zylinderraums A, A' oder B, B' das Dämpfungsmedium zur Dämpfung der Gelenkbewegungen unter Aufbau eines hydraulischen Dämpfungsdrucks p über das Dämpfungsventil 10 verdrängt wird. Das Dämpfungsventil 10 kann auch aus einer Zusammenschaltung mehrerer Ventile bestehen, wozu beispielhaft auf die oben bereits genannte Veröffentlichung DE 203 17 243 U1 und die darin beschriebene Dämpfungsventilanordnung verwiesen wird.

Erfindungsgemäß ist nun zur Erfassung des jeweiligen Dämpfungsdrucks p vorgesehen, dass die jeweils gegensinnig volumenveränderbaren Zylinderräume A, B und/oder A', B' über ein selbsttätig druckabhängig schaltendes Umschaltventil 12 mit einem gemeinsamen Drucksensor 14 verbindbar sind, so dass jeweils der Zylinderraum A oder B bzw. A' oder B' mit dem höheren Druck mit dem Drucksensor 14 verbunden und der Zylinderraum B oder A bzw. B' oder A' mit dem jeweils geringeren Druck von dem Drucksensor 14 getrennt wird.

Durch diese vorteilhafte Ausgestaltung kann im Betrieb mit einfachen Mitteln überwacht werden, ob bei einer Gelenkdrehung in der einen oder der anderen Richtung jeweils ordnungsgemäß ein Dämpfungsdruck p aufgebaut wird. Sollte dies nicht der Fall sein, so wird dies als Störung interpretiert, und es kann über eine nicht dargestellte, die Ausgangssignale des Drucksensors 14 überwachende Steuerung ein Alarmsignal generiert werden, beispielsweise in Form einer akustischen und/oder optischen Warnmeldung für den Fahrzeugführer. Dazu gibt der Drucksensor 14 zweckmäßig in Abhängigkeit von dem erfassten Druck p ein elektrisches Ausgangssignal V ab.

In der ersten, in Fig. 1 dargestellten Ausführung besteht das Umschaltventil 12 aus zwei hydraulisch gegensinnig in Reihe zwischen die gegensinnig volumenveränderbaren Zylinderräume A und B bzw. A' und B' geschalteten Rückschlagventilen 16a und 16b, wobei der Drucksensor 14 zwischen den Rückschlagventilen 16a und 16b angeschlossen ist. Jedes Rückschlagventil 16a, 16b ist hinsichtlich seiner Schließ- und Öffnungsrichtungen derart orientiert, dass es durch eine Druck-Beaufschlagung aus dem zugehörigen Zylinderraum A oder B bzw. A' oder B' öffnet und durch eine entgegengesetzte Druck-Beaufschlagung schließt. Die Rückschlagventile 16a, 16b können als einfache Kugel-Sitzventile jeweils mit einem Ventilsitz auf der dem zugehörigen Zylinderraum A oder B bzw. A' oder B' zugewandten Seite und mit einer Kugel als Ventilelement ausgebildet sein. Durch die beiden Rückschlagventile 16a, 16b ist eine direkte hydraulische Verbindung zwischen den gegensinnig volumenveränderbaren Zylinderräumen A und B bzw. A' und B' vorteilhafterweise ausgeschlossen. Allerdings können hierbei Zustände auftreten, in denen die Druckerfassung nicht ganz optimal ist. Wenn zum Beispiel in dem einen Zylinderraum A (A') oder B (B') ein höheren Druck herrscht und sich dann die Drehrichtung des Drehgelenkes umkehrt, baut sich zunächst der bisherige Druck ab, so dass bei einem bestimmten Druckwert das zugehörige Rückschlagventil 16a oder 16b schließt, noch bevor das andere Rückschlagventil 16b oder 16a öffnet. Zwischen den beiden Rückschlagventilen 16a, 16b bleibt dann ein bestimmter Restdruck erhalten, so dass der Drucksensor 14 noch einen Druck anzeigt, der real nicht mehr vorhanden ist. Dieser Effekt kann als "Kammereffekt" bezeichnet werden. Bei nachfolgender Gelenkdrehung öffnet dann das jeweilige Rückschlagventil 16a oder 16b erst wieder, wenn der in dem jeweiligen Zylinderraum A (A') oder B (B') auftretende Dämpfungsdruck p höher als der zwischen den Rückschlagventilen gekammerte Druck ist. Abgesehen von diesem Effekt ist allerdings die Ausführung gemäß Fig. 1 durchaus anwendbar.

Bei der Ausführung gemäß Fig. 2 wird ein solcher "Kammereffekt" vermieden. Dazu ist das Umschaltventil 12 als Doppelsitzventil 18 mit zwei gegenüberliegenden, den Zylinderräumen A, B bzw. A', B' zugewandten Ventilsitzen 18a, 18b und einem durch wechselseitige Druck-Beaufschlagung freibeweglich zwischen den Ventilsitzen 18a, 18b für eine wechselseitige Schließlage angeordneten Ventilelement 18c ausgebildet. Jeder Ventilsitz 18a, 18b geht in einen von zwei mit den Zylinderräumen A, B bzw. A', B' verbundenen Eingangsanschlüssen über, und das Ventilelement 18c ist innerhalb einer mit dem Drucksensor 14 über einen Ausgangsanschluss verbundenen Ventilkammer angeordnet. Im einfachsten Fall kann es sich um ein Kugel-Doppelsitzventil 18 handeln, wobei als Ventilelement 18c eine Kugel vorgesehen ist. Durch die freibewegliche Anordnung des Ventilelementes 18c innerhalb der Ventilkammer wird der zuvor beschriebene "Kammereffekt" vermieden. Allerdings kann hierbei bei einem Wechsel der Gelenk-Drehrichtung durch eine hydraulische Verbindung zwischen den volumenveränderbaren Zylinderräumen jeweils eine geringe Menge des Dämpfungsmediums zwischen den Räumen A und B bzw. A' und B' strömen. Dadurch ist bei geringen Drehbewegungen die Dämpfung nicht optimal.

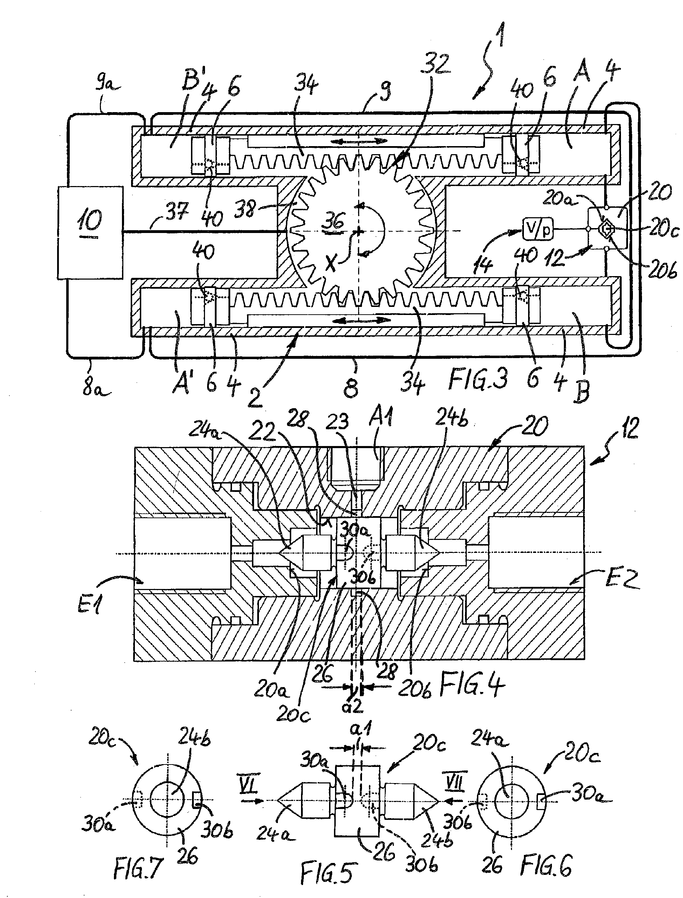

Die in Fig. 3 bis 6 veranschaulichte Ausführungsform vermeidet die zuvor beschriebenen, bei den Ausführungen gemäß Fig. 1 und 2 jeweils noch vorhandenen geringfügigen Nachteile. Deshalb ist dies die bevorzugte Ausführungsform. Hierbei ist das Umschaltventil 12 mit einem derart überlappungsfreien Schaltverhalten ausgebildet, dass jeder Zylinderraum A oder B bzw. A' oder B' nur mit dem Drucksensor 14 verbindbar ist, eine hydraulische Verbindung zwischen den volumenveränderbaren Zylinderräumen A und B bzw. A' und B' jedoch ausgeschlossen ist. Zudem wird hierbei auch der oben beschriebene "Kammereffekt" vermieden. In der dargestellten Ausführung ist dazu das Umschaltventil 12 als kombiniertes Doppelsitz- und Schieberventil 20 ausgebildet. Zunächst weist dazu das Umschaltventil 12 - analog zu Fig. 2 - zwei gegenüberliegende, den Zylinderräumen A, B bzw. A', B' zugewandte Ventilsitze 20a und 20b sowie ein durch wechselseitige Druck-Beaufschlagung freibeweglich zwischen den Ventilsitzen für eine wechselseitige Schließlage angeordnetes Ventilelement 20c auf. Jeder Ventilsitz 20a, 20b geht über einen Kanal in einen Eingangsanschluss E1 bzw. E2 über, siehe Fig. 4. Das Ventilelement 20c ist in einer Ventilkammer 22 axial beweglich angeordnet, wobei die Ventilkammer 22 über einen Querkanal 23 mit einem Ausgangsanschluss A1 verbunden ist, an dem der Drucksensor 14 anzuschließen ist. Wie sich aus den Darstellungen in Fig. 4 bis 7 ergibt, weist das Ventilelement 20c zwei axial gegenüberliegende Dichtabschnitte 24a, 24b zum dichtenden Zusammenwirken mit den Ventilsitzen 20a, 20b sowie einen mittig zwischen den Dichtabschnitten 24a, 24b angeordneten Schieberabschnitt 26 auf. Mit diesem Schieberabschnitt 26 ist das Ventilelement 20c in der Ventilkammer 22 mit einem geringen radialen Bewegungsspiel und dadurch umfangsgemäß dichtend und verschiebbar geführt. Die Ventilkammer 22 weist auf ihrer inneren, zylindrischen Umfangsfläche eine mittig zwischen den Ventilsitzen 20a und 20b angeordnete Umfangsnut 28 auf, in die der mit dem Ausgangsanschluss A1 für den Drucksensor 14 verbundene Querkanal 23 mündet. Weiterhin weist der Schieberabschnitt 26 auf seiner äußeren, zylindrischen Umfangsfläche zwei - insbesondere in diametral gegenüberliegenden Umfangsbereichen angeordnete - axial verlaufende Steuernuten 30a und 30b auf, die jeweils von den gegenüberliegenden Stirnseiten des Schieberabschnitts 26 ausgehen und in einem axial gemessenen Abstand a1 voneinander enden, der größer/gleich der axial gemessenen Breite a2 der inneren Umfangsnut 28 der Ventilkammer 22 ist. Dabei ist der axiale Abstand a1 der Steuernuten 30a, 30b - siehe dazu Fig. 5 - aber maximal so bemessen, dass in der Schließlage des jeweiligen Dichtabschnitts 24a bzw. 24b die jeweils entfernt gegenüberliegende Steuernut 30b bzw. 30a mit ihrem inneren Ende jedenfalls in die innere Umfangsnut 28 der Ventilkammer 22 mündet. Besonders vorteilhaft ist, wenn a1 = a2 ist, weil damit ein exaktes Umschalten in der Ventil-Mittelstellung erreicht wird.

Um eine gute, kipp- und klemmfreie Führung des Ventilelementes 20c zu erreichen, sollte die axiale Länge des Schieberabschnittes 26 mindestens das 1,5-fache seines Durchmessers betragen. Dadurch wird ein unter dem Begriff "Schubladeneffekt" bekanntes Klemmen vermieden.

Die Dichtabschnitte 24a, 24b des Ventilelementes 20c sind bevorzugt als konische Dichtkegel ausgebildet. Zudem weisen die Dichtabschnitte 24a, 24b einen gegenüber dem zylindrischen Schieberabschnitt 26 reduzierten Querschnitt auf. Dadurch kann im geöffneten Zustand des jeweiligen Sitzventils das Hydraulikmedium axial über den jeweiligen Dichtabschnitt hinweg zu der jeweiligen Steuernut 30a oder 30b gelangen und dann durch die Steuernut, die innere Ventil-Umfangsnut 28 und den Querkanal und den Ausgangsanschluss A1 zu dem daran angeschlossenen Drucksensor 14.

Mit der bevorzugten Ausführung gemäß Fig. 3 bis 7 wird einerseits der "Kammereffekt" der Ausführung gemäß Fig. 1 vermieden, und andererseits kann im Unterschied zur Ausführung gemäß Fig. 2 vorteilhafterweise keine direkte hydraulische Verbindung zwischen den Zylinderräumen A und B bzw. A' und B' auftreten. Dadurch lässt sich stets der jeweilige Dämpfungsdruck p sehr genau bestimmen, und auch im Übergang zwischen den Drehrichtungen kann eine ausreichende Dämpfung gewährleistet werden. Wenn während der Bewegung des Ventilelementes 20c zwischen den Ventilsitzen 20a und 20b beide Sitzventile geöffnet sind, sorgt das zusätzliche Schieberventil für das angestrebte überlappungsfreie Umschaltverhalten, indem jeweils nur eine der beiden Steuernuten 30a, 30b hydraulisch mit der inneren Umfangsnut 28 verbunden sein kann. Die beiden von den Ventilsitzen 20a, 20b und den Dichtabschnitten 24a, 24b gebildeten Sitzventile gewährleisten in der jeweiligen Schließlage eine gute Abdichtung auch gegen hohe Drücke, was allein durch das Schieberventil nicht möglich wäre. Der "Kammereffekt" wird deshalb vermieden, weil stets zumindest eines der beiden Sitzventile geöffnet ist. Das zusätzliche Schieberventil sorgt dabei aber für das überlappungsfreie Schaltverhalten, so dass auch dann, wenn in einer etwa mittleren Ventilstellung beide Sitzventile geöffnet sind, die gegensinnig volumenveränderbaren Zylinderräume A, A' oder B, B' immer nur alternativ, aber nie alle gemeinsam, mit dem Drucksensor 14 verbunden sein können. Nur in einer genau mittigen Ventilstellung ist der Drucksensor 14 von allen Zylinderräumen A, A'; B, B' getrennt, weil ja bevorzugt a1 = a2 ist (vergleiche Fig. 4 und 5). Diese Mittelstellung tritt aber immer nur sehr kurzzeitig auf, wenn sich die Gelenk-Drehrichtung umkehrt. Das Ventilelement 20c wird jeweils durch eine axiale Verschiebekraft bewegt, die nach der Beziehung F = p · A (Kraft = Druck mal Fläche) durch Beaufschlagung der jeweils axial wirksamen Stirnfläche des Ventilelementes 20c mit dem jeweils auf dieser Seite wirkenden Druck entsteht. Insgesamt hat das erfindungsgemäße Umschaltventil 12 in der bevorzugten Ausführung gemäß Fig. 3 bis 7 ein sehr exaktes Umschaltverhalten.

Was noch in konstruktiver Hinsicht die bevorzugte Ausführung der Dämpfungseinrichtung 1 mit einer aus vier Dämpferzylindern 4 bestehenden Kolbenzylinderanordnung 2 betrifft, so ist zum Antrieb aller Kolben 6 vorzugsweise eine gemeinsame Antriebseinrichtung 32 vorgesehen, über die durch relative Verdrehung von zwei Gelenkteilen des Drehgelenkes die Kolben 6 jeweils paarweise gegensinnig angetrieben werden. Gemäß Fig. 1 bis 3 ist dazu die Antriebseinrichtung 32 als Zahnradantrieb ausgebildet, wobei jeder Kolben 6 mit einer Zahnstange 34 verbunden ist, die in Eingriff mit einem Zahnrad 36 steht, so dass bei Rotation des Zahnrades 36 jeder Kolben 6 über die zugehörige Zahnstange 34 linear in dem jeweiligen Dämpferzylinder 4 bewegt wird. Weiterhin handelt es sich bei der Kolbenzylinderanordnung 2 bevorzugt um eine - in einer Längsschnitt-Ebene gesehen - H-förmige Ausgestaltung mit vier, jeweils einen von vier Kolben 6 aufnehmenden Dämpferzylindern 4, wobei jeweils zwei gegenläufige Kolben 6 über eine von zwei zueinander parallelen Zahnstangen 34 miteinander verbunden sind. Die beiden parallelen Zahnstangen 34 stehen auf zwei diametral gegenüberliegenden Seiten tangential mit dem Zahnrad 36 in Eingriff. Aus dieser Ausgestaltung resultieren bei Drehung des Zahnrades 36 axial entgegengesetzte Linearbewegungen der beiden Zahnstangen 34 mit den jeweils verbundenen Kolben 6. Die Bewegungen sind in Fig. 1 bis 3 durch Doppelpfeile veranschaulicht.

In weiterer vorteilhafter Ausgestaltung ist das eingangsseitig mit den Zylinderräumen A, B; A', B' über Leitungen 8a, 9a verbundene Dämpfungsventil 10 ausgangsseitig über eine Leitung 37 mit einer Gehäusekammer 38 verbunden. Diese Gehäusekammer 38 nimmt auch die Antriebseinrichtung 32 mit dem Zahnrad 36 und den Zahnstangen 34 auf und ist ebenfalls mit dem hydraulischen Dämpfungsmedium gefüllt. Das jeweils zur Dämpfung durch das Dämpfungsventil 10 strömende Dämpfungsmedium fließt über die Leitung 37 in die Gehäusekammer 38 und von dort in die sich bei der jeweiligen Bewegung im Volumen vergrößernden Zylinderräume. Dazu ist die Gehäusekammer 38 über in Kolbenpassagen angeordnete Ansaugventile 40 mit den Zylinderräumen A, B bzw. A', B' verbunden. Bei den Ansaugventilen 40 handelt es sich um Rückschlagventile, die die beschriebene Rückströmung des Dämpfungsmediums aus der Gehäusekammer 38 in die sich jeweils vergrößernden Zylinderräume ermöglichen, für eine umgekehrte Strömung jedoch schließen, damit das Dämpfungsmedium bei Volumenverkleinerung des jeweiligen Zylinderraumes zu dem Dämpfungsventil 10 verdrängt wird.

In einer besonders vorteilhaften Ausgestaltung bildet die Dämpfungseinrichtung 1 mit ihrer Kolbenzylinderanordnung 2 unmittelbar das Drehgelenk für ein Gelenkfahrzeug. Dazu ist das Gehäuse in einer zu der zur Zeichnungsebene in Fig. 1 bis 3 jeweils senkrecht verlaufenden Rotationsachse X des Zahnrads 36 senkrechten, also zur Zeichnungsebene parallelen Ebene in zwei Gehäuseteile unterteilt, wobei die beiden Gehäuseteile gegeneinander um die Achse X verdrehbar sowie abgedichtet miteinander verbunden sind. Demnach bildet die Achse X auch die Drehachse des Drehgelenkes. In dem ersten Gehäuseteil ist das Zahnrad drehbar gelagert, und das zweite Gehäuseteil bildet ein mit dem Zahnrad 36 verbundenes Antriebselement. Auf diese Weise kann mit jedem der beiden Gehäuseteile eines von zwei gelenkig zu verbindenden Fahrzeugteilen verbunden werden. Indem die beiden Gehäuseteile über geeignete Drehlager spielfrei drehbar miteinander verbunden sind, kann auf eine zusätzliche Drehlagerung zwischen den Fahrzeugteilen verzichtet werden. Wesentlich ist hierbei aber, dass das Drehlager sowohl axiale als auch radiale Kräfte aufnehmen kann.

Die Erfindung ist nicht auf die dargestellten und beschriebenen Ausführungsbeispiele beschränkt, sondern umfasst auch alle im Sinne der Erfindung gleichwirkenden Ausführungen gemäß der Ansprüche.

## Patentansprüche

1. Hydraulische Dämpfungseinrichtung (1) für ein Drehgelenk eines Gelenkfahrzeuges, mit mindestens zwei durch relative Drehungen des Drehgelenkes gegensinnig volumenveränderbaren, mit einem hydraulischen Dämpfungsmedium gefüllten Zylinderräumen (A, B; A', B'), die derart mit einem hydraulischen Dämpfungsventil (10) verbunden sind, dass jeweils bei einer Volumen-Verkleinerung das Dämpfungsmedium zur Dämpfung unter Aufbau eines hydraulischen Dämpfungsdrucks (p) über das Dämpfungsventil (10) verdrängt wird,
**dadurch gekennzeichnet, dass** die jeweils gegensinnig volumenveränderbaren Zylinderräume (A, B; A', B') über ein selbsttätig druckabhängig schaltendes Umschaltventil (12) mit einem gemeinsamen Drucksensor (14) verbindbar sind, so dass jeweils der Zylinderraum (A oder B; A' oder B') mit dem höheren Druck mit dem Drucksensor (14) verbunden und der Zylinderraum (B oder A; B' oder A') mit dem geringeren Druck von dem Drucksensor (14) getrennt wird.

2. Dämpfungseinrichtung nach Anspruch 1,
**dadurch gekennzeichnet, dass** das Umschaltventil (12) aus zwei hydraulisch gegensinnig in Reihe zwischen die gegensinnig volumenveränderbaren Zylinderräume (A, B; A', B') geschalteten Rückschlagventilen (16a, 16b) besteht, wobei der Drucksensor (14) zwischen den Rückschlagventilen (16a, 16b) angeschlossen ist, und wobei jedes Rückschlagventil (16a, 16b) derart orientiert ist, dass es durch eine Druck-Beaufschlagung aus dem zugehörigen Zylinderraum (A, B; A', B') öffnet und durch eine entgegengesetzte Druck-Beaufschlagung schließt.

3. Dämpfungseinrichtung nach Anspruch 1 oder 2,
**dadurch gekennzeichnet, dass** das Umschaltventil (12) als Doppelsitzventil (18) mit zwei gegenüberliegenden, den Zylinderräumen (A, B; A', B') zugewandten Ventilsitzen (18a, 18b) und einem in einer mit dem Drucksensor (14) verbundenen Ventilkammer durch wechselseitige Druck-Beaufschlagung freibeweglich zwischen den Ventilsitzen (18a, 18b) für eine wechselseitige Schließlage angeordneten Ventilelement (18c) ausgebildet ist.

4. Dämpfungseinrichtung nach Anspruch 1,
**dadurch gekennzeichnet, dass** das Umschaltventil (12) mit einem derart überlappungsfreien Schaltverhalten ausgebildet ist, dass jeder Zylinderraum (A oder B/A' oder B') nur mit dem Drucksensor (14) verbindbar ist, eine hydraulische Verbindung zwischen den volumenveränderbaren Zylinderräumen (A, B/A', B') jedoch ausgeschlossen ist.

5. Dämpfungseinrichtung nach Anspruch 4,
**dadurch gekennzeichnet, dass** das Umschaltventil (12) als kombiniertes Doppelsitz- und Schieberventil (20) ausgebildet ist.

6. Dämpfungseinrichtung nach Anspruch 4 oder 5,
**dadurch gekennzeichnet, dass** das Umschaltventil (12) zwei gegenüberliegende, den Zylinderräumen (A, B/A', B') zugewandte Ventilsitze (20a, 20b) und ein durch wechselseitige Druck-Beaufschlagung freibeweglich zwischen den Ventilsitzen (20a, 20b) für eine wechselseitige Schließlage angeordnetes Ventilelement (20c) aufweist, wobei das Ventilelement (20c) zwei gegenüberliegende Dichtabschnitte (24a, 24b) zum Zusammenwirken mit den Ventilsitzen (20a, 20b) sowie einen mittig zwischen den Dichtabschnitten (24a, 24b) angeordneten Schieberabschnitt (26) aufweist, wobei der Schieberabschnitt (26) in einer Ventilkammer (22) umfangsgemäß dichtend und verschiebbar geführt ist und die Ventilkammer (22) auf ihrer inneren Umfangsfläche eine mittige Umfangsnut (28) aufweist, in die ein mit einem Ausgangsanschluss (A1) für den Drucksensor (14) verbundener Kanal (23) mündet, und wobei der Schieberabschnitt (26) auf seiner äußeren Umfangsfläche zwei axial verlaufende Steuernuten (30a, 30b) aufweist, die jeweils von den gegenüberliegenden Stirnseiten des Schieberabschnitts (26) ausgehen und in einem axial gemessenen Abstand (a1) voneinander enden, der größer oder gleich, insbesondere gleich der axial gemessenen Breite (a2) der inneren Umfangsnut (28) der Ventilkammer (22) ist.

7. Dämpfungseinrichtung nach Anspruch 6,
**dadurch gekennzeichnet, dass** der axiale Abstand (a1) der Steuernuten (30a, 30b) maximal so bemessen ist, dass in der Schließlage des jeweiligen Dichtabschnittes (24a, 24b) die jeweils entfernt gegenüberliegende Steuernut (30b; 30a) mit ihren inneren Enden in die innere Umfangsnut (28) der Ventilkammer (22) mündet.

8. Dämpfungseinrichtung nach Anspruch 6 oder 7,
**dadurch gekennzeichnet, dass** die Dichtabschnitte (24a, 24b) des Ventilelementes (20c) als Dichtkegel ausgebildet sind.

9. Dämpfungseinrichtung nach einem der Ansprüche 6 bis 8,
**dadurch gekennzeichnet, dass** die Dichtabschnitte (24a, 24b) jeweils mit einem gegenüber dem Schieberabschnitt (26) reduzierten Querschnitt ausgebildet sind.

10. Dämpfungseinrichtung nach einem der Ansprüche 1 bis 9,
**gekennzeichnet durch** eine Kolbenzylinderanordnung (2) mit mindestens zwei Dämpferzylindern (4) und mit **durch** relative Drehungen des Drehgelenkes zur Volumenänderung des jeweiligen Zylinderraumes (A, B; A', B') gegensinnig axial bewegten Kolben (6).

11. Dämpfungseinrichtung nach Anspruch 10,
**gekennzeichnet durch** zwei zusätzliche Dämpferzylinder (4), so dass zwei mal zwei gegensinnig bewegte Kolben (6) und zwei mal zwei gegensinnig volumenveränderbare Zylinderräume (A, A' und B, B') vorhanden sind, wobei jeweils zwei mal zwei gleichsinnig volumenveränderbare Zylinderräume (A, A' und B, B') hydraulisch miteinander verbunden sind.

12. Dämpfungseinrichtung nach Anspruch 10 oder 11,
**dadurch gekennzeichnet, dass** die Kolben (6) aller Dämpferzylinder (4) von einer gemeinsamen Antriebseinrichtung (32) durch relative Verdrehung von zwei Gelenkteilen des Drehgelenkes angetrieben werden.

13. Dämpfungseinrichtung nach Anspruch 12,
**dadurch gekennzeichnet, dass** die Antriebseinrichtung (32) als Zahnradantrieb ausgebildet ist, wobei jeder Kolben (6) mit einer Zahnstange (34) verbunden ist, die in Eingriff mit einem Zahnrad (36) ist, so dass bei Rotation des Zahnrades (36) jeder Kolben (6) über die zugehörige Zahnstange (34) linear in dem Dämpferzylinder (4) bewegt wird.

14. Dämpfungseinrichtung nach Anspruch 13,
**gekennzeichnet durch** eine in einer Längsschnitt-Ebene gesehen H-förmige Ausgestaltung mit vier, jeweils einen von vier Kolben (6) aufnehmenden Dämpferzylindern (4), wobei jeweils zwei gegenläufige Kolben (6) über eine von zwei Zahnstangen (34) miteinander verbunden sind, und wobei die zwei Zahnstangen (34) parallel zueinander auf zwei diametral gegenüberliegenden Seiten mit dem Zahnrad (36) in Eingriff sind.

15. Dämpfungseinrichtung nach einem der Ansprüche 1 bis 14,
**dadurch gekennzeichnet, dass** das eingangsseitig mit den Zylinderräumen verbundene Dämpfungsventil (10) ausgangsseitig mit einer Gehäusekammer (38) verbunden ist, wobei die Gehäusekammer (38) über in Kolben-Passagen angeordnete Ansaugventile (40) mit den Zylinderräumen (A, B; A', B') verbunden ist.

16. Dämpfungseinrichtung nach Anspruch 15,
**dadurch gekennzeichnet, dass** in der Gehäusekammer (38) auch die Antriebseinrichtung (32) für die Kolben (6) angeordnet ist.

## Claims

1. Hydraulic damping device (1) for a swivel joint of an articulated vehicle, comprising at least two cylinder chambers (A, B; A', B') which are inversely volume-variable through relative rotations of the swivel joint, which are filled with a hydraulic damping medium and are connected to a hydraulic damping valve (10) in such a way that, upon reduction of a respective volume, the damping medium is displaced via the damping valve (10) for the purpose of damping while building up a hydraulic damping pressure (p),
**characterized in that** the respective inversely volume-variable cylinder chambers (A, B; A', B') are connectable via an automatically, pressure-dependently switching switch-over valve (12) to a common pressure sensor (14), so that the cylinder chamber (A or B; A' or B') having the higher pressure at the time is connected to the pressure sensor (14) and the cylinder chamber (B or A; B' or A') having the lower pressure is isolated from the pressure sensor (14).

2. Damping device according to Claim 1,
**characterized in that** the switch-over valve (12) consists of two non-return valves (16a, 16b) connected hydraulically in reverse series between the inversely volume-variable cylinder chambers (A, B; A', B'), the pressure sensor (14) being connected between the non-return valves (16a, 16b) and each non-return valve (16a, 16b) being oriented in such a way that it opens through a pressurization from the associated cylinder chamber (A, B; A', B') and closes through an opposite pressurization.

3. Damping device according to Claim 1 or 2,
**characterized in that** the switch-over valve (12) is in the form of a double-seat valve (18) with two opposite valve seats (18a, 18b) facing towards the cylinder chambers (A, B; A', B') and with a valve element (18c) arranged freely movably between the valve seats (18a, 18b) in a valve chamber connected to the pressure sensor (14) so as to adopt alternate closed positions through pressurization on alternate sides.

4. Damping device according to Claim 1,
**characterized in that** the switch-over valve (12) is configured with an overlap-free switching behavior such that each cylinder chamber (A or B/A' or B') is connectable only to the pressure sensor (14), while a hydraulic connection between the volume-variable cylinder chambers (A, B/A', B') is excluded.

5. Damping device according to Claim 4,
**characterized in that** the switch-over valve (12) is in the form of a combined double-seat and slide valve (20).

6. Damping device according to Claim 4 or 5,
**characterized in that** the switch-over valve (12) has two opposite valve seats (20a, 20b) facing towards the cylinder chambers (A, B/A', B') and a valve element (20c) arranged freely movably between the valve seats (20a, 20b) so as to adopt alternate closed positions through pressurization on alternate sides, the valve element (20c) having two opposite sealing sections (24a, 24b) for cooperation with the valve seats (20a, 20b) and a slide section (26) arranged centrally between the sealing sections (24a, 24b), the slide section (26) being guided displaceably in a circumferentially sealing manner on a valve chamber (22) and the valve chamber (22) having a central circumferential groove (28) on its inner circumferential surface, into which groove (28) a channel (23) connected to an outlet port (A1) for the pressure sensor (14) opens, and the slide section (26) having two axially disposed control grooves (30a, 30b) on its outer circumferential surface, which control grooves (30a, 30b) start from the respective opposite end faces of the slide section (26) and end at an axially measured distance (a1) from one another which is greater than or equal to, in particular equal to, the axially measured width (a2) of the internal circumferential groove (28) of the valve chamber (22).

7. Damping device according to Claim 6,
**characterized in that** the maximum axial distance (a1) between the control grooves (30a, 30b) is such that, in the closed position of the respective sealing section (24a, 24b), the respective control groove (30b; 30a) disposed remotely opposite opens with its inner ends into the internal circumferential groove (28) of the valve chamber (22).

8. Damping device according to Claim 6 or 7,
**characterized in that** the sealing sections (24a, 24b) of the valve element (20c) are configured as sealing cones.

9. Damping device according to any one of Claims 6 to 8,
**characterized in that** the sealing sections (24a, 24b) are in each case configured with a reduced cross section as compared to the slide section (26).

10. Damping device according to any one of Claims 1 to 9,
**characterized by** a piston-cylinder arrangement (2) comprising at least two damper cylinders (4) and comprising pistons (6) which are moved axially in opposite directions by relative rotations of the swivel joint so as to change the volume of the respective cylinder chamber (A, B; A', B').

11. Damping device according to Claim 10,
**characterized by** two additional damper cylinders (4), so that two times two pistons (6) moved in opposite directions and two times two inversely volume-variable cylinder chambers (A, A' and B, B') are present, two times two cylinder chambers (A, A' and B, B') which are volume-variable in the same direction being connected hydraulically to one another in each case.

12. Damping device according to Claim 10 or 11,
**characterized in that** the pistons (6) of all the damper cylinders (4) are driven by a common drive arrangement (32) through relative rotation of two joint parts of the swivel joint.

13. Damping device according to Claim 12,
**characterized in that** the drive arrangement (32) is in the form of a gear drive, each piston (6) being connected to a rack (34) which engages with a gear wheel (36), so that upon rotation of the gear wheel (36) each piston (6) is moved linearly in the damper cylinder (4) by means of the associated rack (34).

14. Damping device according to Claim 13,
**characterized by** an H-shaped configuration, viewed in a longitudinal section plane, comprising four damper cylinders (4) each receiving one of four pistons (6), each two pistons (6) which move in opposite directions being connected to one another via one of two racks (34) and the two racks (34) being disposed parallel to one another and engaging with the gear wheel (36) on two diametrically opposite sides.

15. Damping device according to any one of Claims 1 to 14,
**characterized in that** the damping valve (10) connected on the inlet side to the cylinder chambers is connected on the outlet side to a housing chamber (38), the housing chamber (38) being connected to the cylinder chambers (A, B; A', B') via intake valves (40) arranged in piston passages.

16. Damping device according to Claim 15,
**characterized in that** the drive arrangement (32) for the pistons (6) is also arranged in the housing chamber (38).

## Revendications

1. Dispositif d'amortissement hydraulique (1) pour une articulation tournante d'un véhicule articulé, comprenant au moins deux espaces cylindriques (A, B ; A', B') remplis d'un milieu d'amortissement hydraulique et dont le volume peut être modifié de manière opposée par des rotations relatives de l'articulation tournante, lesquels espaces cylindriques sont reliés à une soupape d'amortissement hydraulique (10) de telle sorte que, lors d'une réduction de volume respective, le milieu d'amortissement soit refoulé par le biais de la soupape d'amortissement (10) en vue de l'amortissement en établissant une pression d'amortissement hydraulique (p),
**caractérisé en ce que** les espaces cylindriques (A, B ; A', B') dont le volume peut respectivement être modifié de manière opposée peuvent être reliés à un capteur de pression commun (14) par le biais d'une soupape de commutation (12) commutant automatiquement en fonction de la pression, de telle sorte que l'espace cylindrique (A ou B ; A' ou B') respectif présentant la pression plus élevée soit relié au capteur de pression (14) et que l'espace cylindrique (B ou A ; B' ou A') respectif présentant la pression plus faible soit déconnecté du capteur de pression (14).

2. Dispositif d'amortissement selon la revendication 1,
**caractérisé en ce que** la soupape de commutation (12) est constituée de deux soupapes anti-retour (16a, 16b) commutées hydrauliquement de manière opposée en série entre les espaces cylindriques (A, B ; A', B') dont le volume peut être modifié de manière opposée, le capteur de pression (14) étant raccordé entre les soupapes anti-retour (16a, 16b), et chaque soupape anti-retour (16a, 16b) étant orientée de telle sorte qu'elle s'ouvre sous l'effet d'une sollicitation en pression à partir de l'espace cylindrique associé (A, B ; A', B') et se ferme sous l'effet d'une sollicitation en pression opposée.

3. Dispositif d'amortissement selon la revendication 1 ou 2,
**caractérisé en ce que** la soupape de commutation (12) est réalisée sous forme de soupape à deux sièges (18) comprenant deux sièges de soupape (18a, 18b) opposés tournés vers les espaces cylindriques (A, B ; A', B') et un élément de soupape (18c) disposé dans une chambre de soupape reliée au capteur de pression (14) de manière mobile librement par sollicitation en pression alternée entre les sièges de soupape (18a, 18b) pour une position de fermeture alternée.

4. Dispositif d'amortissement selon la revendication 1,
**caractérisé en ce que** la soupape de commutation (12) est réalisée avec un comportement de commutation sans chevauchement de telle sorte que chaque espace cylindrique (A ou B/A' ou B') ne puisse être relié qu'au capteur de pression (14), une liaison hydraulique entre les espaces cylindriques (A, B/A', B') dont le volume peut être modifié étant cependant exclue.

5. Dispositif d'amortissement selon la revendication 4,
**caractérisé en ce que** la soupape de commutation (12) est réalisée sous forme de soupape combinée à deux sièges et à tiroir (20).

6. Dispositif d'amortissement selon la revendication 4 ou 5,
**caractérisé en ce que** la soupape de commutation (12) comprend deux sièges de soupape (20a, 20b) opposés tournés vers les espaces cylindriques (A, B/A', B') et un élément de soupape (20c) disposé de manière mobile librement par sollicitation en pression alternée entre les sièges de soupape (20a, 20b) pour une position de fermeture alternée, l'élément de soupape (20c) comprenant deux portions d'étanchéité opposées (24a, 24b) pour la coopération avec les sièges de soupape (20a, 20b) ainsi qu'une portion de tiroir (26) disposée centralement entre les portions d'étanchéité (24a, 24b), la portion de tiroir (26) étant guidée de manière étanche sur la périphérie et de manière coulissante dans une chambre de soupape (22) et la chambre de soupape (22) présentant une rainure périphérique centrale (28) sur sa surface périphérique intérieure, dans laquelle rainure périphérique débouche un canal (23) relié à un raccord de sortie (A1) pour le capteur de pression (14), et la portion de tiroir (26) comprenant sur sa surface périphérique extérieure deux rainures de commande (30a, 30b) s'étendant axialement, lesquelles partent respectivement des côtés frontaux opposés de la portion de tiroir (26) et se terminent à une distance mesurée axialement (a1) l'une de l'autre, laquelle distance est supérieure ou égale, en particulier égale, à la largeur mesurée axialement (a2) de la rainure périphérique intérieure (28) de la chambre de soupape (22).

7. Dispositif d'amortissement selon la revendication 6,
**caractérisé en ce que** la distance axiale (a1) entre les rainures de commande (30a, 30b) est dimensionnée au maximum de telle sorte que, dans la position de fermeture de la portion d'étanchéité (24a, 24b) respective, la rainure de commande (30b ; 30a) respectivement opposée de manière éloignée débouche par ses extrémités intérieures dans la rainure périphérique intérieure (28) de la chambre de soupape (22).

8. Dispositif d'amortissement selon la revendication 6 ou 7,
**caractérisé en ce que** les portions d'étanchéité (24a, 24b) de l'élément de soupape (20c) sont réalisées sous forme de cônes d'étanchéité.

9. Dispositif d'amortissement selon l'une quelconque des revendications 6 à 8,
**caractérisé en ce que** les portions d'étanchéité (24a, 24b) sont réalisées respectivement avec une section transversale réduite par rapport à la portion de tiroir (26).

10. Dispositif d'amortissement selon l'une quelconque des revendications 1 à 9,
**caractérisé par** un ensemble piston-cylindre (2) comprenant au moins deux cylindres d'amortissement (4) et comprenant des pistons (6) déplacés axialement de manière opposée par des rotations relatives de l'articulation tournante en vue de la modification du volume de l'espace cylindrique (A, B ; A', B') respectif.

11. Dispositif d'amortissement selon la revendication 10,
**caractérisé par** deux cylindres d'amortissement supplémentaires (4), de telle sorte que deux fois deux pistons (6) déplacés de manière opposée et deux fois deux espaces cylindriques (A, A' et B, B') dont le volume peut être modifié de manière opposée soient présents, deux fois deux espaces cylindriques (A, A' et B, B') dont le volume peut être modifié de manière opposée étant respectivement reliés les uns aux autres de manière hydraulique.

12. Dispositif d'amortissement selon la revendication 10 ou 11,
**caractérisé en ce que** les pistons (6) de tous les cylindres d'amortissement (4) sont entraînés par un dispositif d'entraînement commun (32) par une rotation relative de deux parties d'articulation de l'articulation tournante.

13. Dispositif d'amortissement selon la revendication 12,
**caractérisé en ce que** le dispositif d'entraînement (32) est réalisé sous forme d'entraînement par engrenage, chaque piston (6) étant relié à une crémaillère (34) qui s'engrène avec une roue dentée (36), de telle sorte que, lors de la rotation de la roue dentée (36), chaque piston (6) soit déplacé linéairement dans le cylindre d'amortissement (4) par le biais de la crémaillère associée (34).

14. Dispositif d'amortissement selon la revendication 13,
**caractérisé par** une configuration en forme de H vue dans un plan de coupe longitudinal, comprenant quatre cylindres d'amortissement (4) recevant respectivement l'un parmi quatre pistons (6), deux pistons (6) respectifs de sens opposés étant reliés l'un à l'autre par le biais de l'une parmi deux crémaillères (34), et les deux crémaillères (34) s'engrenant parallèlement l'une à l'autre avec la roue dentée (36) sur deux côtés diamétralement opposés.

15. Dispositif d'amortissement selon l'une quelconque des revendications 1 à 14,
**caractérisé en ce que** la soupape d'amortissement (10) reliée aux espaces cylindriques du côté de l'entrée est reliée à une chambre de boîtier (38) du côté de la sortie, la chambre de boîtier (38) étant reliée aux espaces cylindriques (A, B ; A', B') par le biais de soupapes d'aspiration (40) disposées dans des passages de piston.

16. Dispositif d'amortissement selon la revendication 15,
**caractérisé en ce que** dans la chambre de boîtier (38) est également disposé le dispositif d'entraînement (32) pour les pistons (6).
